(19) Europäisches Patentamt
European Patent Office
Office européen des brevets

(11) Veröffentlichungsnummer: **0 081 113**
**A2**

(12) # EUROPÄISCHE PATENTANMELDUNG

(21) Anmeldenummer: 82110637.4

(51) Int. Cl.³: H 01 B 1/12

(22) Anmeldetag: 18.11.82

(30) Priorität: 01.12.81 DE 3147476

(43) Veröffentlichungstag der Anmeldung:
15.06.83 Patentblatt 83/24

(84) Benannte Vertragsstaaten:
CH DE FR GB IT LI

(71) Anmelder: BAYER AG
Zentralbereich Patente, Marken und Lizenzen
D-5090 Leverkusen 1, Bayerwerk(DE)

(72) Erfinder: Hocker, Jürgen, Dr.
Eichenweg 6
D-5060 Bergisch Gladbach(DE)

(72) Erfinder: Dhein, Rolf, Dr.
Deswatinesstrasse 30
D-4150 Krefeld(DE)

(72) Erfinder: Merten, Rudolf, Dr.
Berta-von-Suttner-Strasse 55
D-5090 Leverkusen(DE)

(54) **Dotierte polymere organische Leiter und Verfahren zu ihrer Herstellung.**

(57) Erhöhung der elektrischen Leitfähigkeit von konjugierten Polymeren durch teilweise Oxidation (Dotierung) mit einer Verbindung des vierwertigen Titans oder Zinns.

EP 0 081 113 A2

Croydon Printing Company Ltd.

0081113

BAYER AKTIENGESELLSCHAFT 5090 Leverkusen, Bayerwerk

Zentralbereich
Patente, Marken und Lizenzen G/ABc

# Dotierte polymere organische Leiter und Verfahren zu ihrer Herstellung

Die Erfindung betrifft neuartig oxidierte polymere Leiter, ein Verfahren zu ihrer Herstellung, sowie ihre Verwendung als elektrische Leiter, Halbleiter oder Photoleiter.

Konjugierte organische Polymere wie Polyacetylen, Polyparaphenylen, Polyparaphenylensulfid, Polypyrrol, Polythiophen bzw. deren Substitutionsprodukte zeigen spezifische elektrische Leitfähigkeiten zwischen $10^{-16}$ und $10^{-5}\,\Omega^{-1}\,cm^{-1}$ und sind somit Isolatoren oder Halbleiter [Makromol. Chem., Vol. 175, 1565 (1978)].

Diese Leitfähigkeit läßt sich jedoch durch partielle Oxidation beträchtlich erhöhen. Läßt man gasförmiges $Cl_2$, $Br_2$, $J_2$, JCl, JBr, $AsF_5$, $SbF_5$ z.B. auf eine Polyacetylenfolie einwirken, so steigt die Leitfähigkeit auf bis zu $\sim 10^{+3}\,\Omega^{-1}\,cm^{-1}$ an [J. Amer. Chem. Soc., Vol. 100, 1013 (1978)].

Auch die Oxidation mit $AgBF_4$ bzw. $AgClO_4$ wurde vorgeschlagen (J. Chem. Soc., Chem. Comm. 1978, 489). Das Europäische Patent Nr. 0 022 271 beschreibt die Verwendung von Metall-Komplexen der Platin-Gruppe, Carbonium- bzw. Oxonium-Salzen, sowie Parabenzochinon-Derivaten zur Erhöhung der elektrischen Leitfähigkeit von Polyacetylen.

Die besten Leitfähigkeiten werden mit $J_2$ oder $AsF_5$ erhalten.

Die meisten der bisher bekannten Reagenzien zur Erhöhung der elektrischen Leitfähigkeit sind entweder schwer zugänglich, toxisch, korrosiv, schwer zu handhaben, hydrolyseempfindlich oder leicht flüchtig.

Ziel der Erfindung war es, leicht zugängliche, wenig toxische, und schwer flüchtige Substanzen zu finden, die die elektrische Leitfähigkeit konjugierter organischer Polymere erhöhen.

Es wurde nun überraschenderweise gefunden, daß sich die elektrische Leitfähigkeit konjugierter organischer Polymerer beträchtlich erhöhen läßt, wenn man sie mit Salzen des vierwertigen Titans oder Zinns oxidiert.

Gegenstand der Erfindung sind somit organische Polymere wie Polyacetylen, Polyparaphenylen, Polyparaphenylensulfid, Polypyrrol oder Polythiophen, deren Leitfähigkeit durch Oxidation ("Dotierung") mit leicht zugänglichen, wenig toxischen und schwer flüchtigen Verbindungen, z.B. Salzen des vierwertigen Titans oder Zinns erhöht wurde, das Verfahren zur Herstellung dieser partiell oxidierten Polymeren, sowie ihre Verwendung als elektrische Leiter, Halbleiter oder Photoleiter.

Geeignete Salze sind: $TiF_4$, $Na_2TiF_6$, Titan(IV)ethoxid, Titan(IV)-acetylacetonat, Zinn(IV)acetylacetonat, Methylzinn-trichlorid, Dimethylzinn-dichlorid, Tetrakis-dimethylamino-zinn u.a.

Besonders bevorzugt sind die Halogenide des vierwertigen Titans und Zinns, insbesondere $TiCl_4$ und $SnCl_4$.

Die Salze können gegebenenfalls Kristallwasser enthalten.

Besonders geeignet sind weiterhin solche Salze des vierwertigen Titans und Zinns, die in einem organischen Lösungsmittel löslich oder leicht sublimierbar sind.

Die Salze werden im allgemeinen in Mengen von 0,1-200 Gew.-%, vorzugsweise von 10-120 Gew.-%, insbesondere von 20-100 Gew.-%, bezogen auf das Polymere, zugesetzt.

Besonders bevorzugt ist die Dotierung des Polyacetylens mit Halogeniden des vierwertigen Titans oder Zinns.

Die erfindungsgemäß eingesetzten Salze erhöhen z.B. die Leitfähigkeit der nach allen üblichen Verfahren hergestellten Polyacetylene. Geeignete Katalysatorsysteme zur Polymerisation von Acetylen sind insbesondere Ziegler-Natta-Katalysatoren [Polymer Journal, 2, 231 (1971)] und Luttinger-Katalysatoren [J. Org. Chem. 27, 1591 (1962)]. Besonders bevorzugt ist ein Katalysatorsystem, das aus 0,05 - 0,2 Mol einer Vanadiumverbindung I

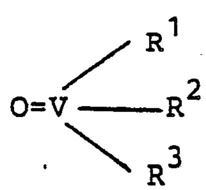

(I)

worin

$R^1$ für Halogen (Chlor),

$R^2$ und $R^3$ für Halogen (Chlor), $OR^5$ ($R^5 = C_1-C_{20}$-Alkyl) steht, wobei $R^2$ und $R^3$ gleich oder verschieden sein können, und 0,1-4,0 Mol eines Trialkylaluminiums besteht.

Die Oxidation der organischen Polymeren wird vorzugsweise in einem organischen oder anorganischen Lösungsmittel durchgeführt. Geeignete organische Lösungsmittel sind polare Lösungsmittel wie z.B. Methanol, Ethanol, Propanol, i-Propanol, Acetonitril, Aceton, Dimethylformamid, N-Methylpyrrolidon, Sulfolan, Hexamethylphosphorsäuretrisamid, Propylencarbonat.

Auch Wasser bzw. ein Gemisch von Wasser mit einem Wassermischbaren organischen Lösungsmittel ist geeignet. Da die erfindungsgemäßen organischen Polymeren in allen üblichen Lösungsmitteln unlöslich sind, wird die Oxidation in Suspension durchgeführt.

In Ausnahmefällen kann auch - falls das Oxidationsmittel sublimierbar ist - in der Gasphase oxidiert werden.

Die Oxidation kann zwischen -80 und +200°C, vorzugsweise zwischen -40 und +80°C durchgeführt werden. Besonders zweckmäßig ist die Umsetzung bei Raumtemperatur.

Das zur Oxidation eingesetzte Polymere kann als feines Pulver, in Form einer Folie oder als Gel vorliegen.

Besonders bevorzugt ist die Oxidation von Polyacetylenteilchen in Form von Partikeln eines Durchmessers von 0,01 bis 1 mm mit einer Vielzahl faserförmiger Fortsätze ("Kletten"), die man erhält, wenn man Acetylen in ein organisches Suspendiermittel unter ständigem Durchmischen in Gegenwart eines metallorganischen Mischkatalysators in eine Menge entsprechend 10-100 mmol Aluminium und 5-50 mmol Titantetrabutylat bzw. 1-10 mmol Bis-(2,2-dimethylpropoxy)-vanadiumoxychlorid pro l Suspendiermittel einleitet, bis sich pro l Suspendiermittel ca. 3 g Polyacetylen gebildet hat. "Kletten"-förmiges Polyacetylen zeigt die Fig. 1.

Das Ausmaß der Oxidation ("Dotierung") läßt sich durch die eingesetzte Menge an Oxidationsmittel, durch die Einwirkungszeit, und durch die Temperatur steuern. Es ist somit möglich, die Leitfähigkeit der partiell oxidierten Polymeren zwischen $10^{-8}$ und $10^{+2}$ $\Omega^{-1}$ $cm^{-1}$ zu steuern.

Die Oxidation ("Dotierung") wird gegebenenfalls in einer Inertgasatmosphäre durchgeführt, um die Oxidation sauerstoffempfindlicher Polymerer durch Luftsauerstoff zu verhindern.

Die erfindungsgemäßen Produkte können als elektrische Leiter, Halbleiter oder Photoleiter sowie zur Dämpfung elektromagnetischer Strahlung Verwendung finden.

Dabei können die erfindungsgemäßen oxidierten Polymeren sowohl in Substanz eingesetzt als auch einem anderen Polymeren als "Füllstoff" zugesetzt und somit dessen elektrische Eigenschaften verbessert werden.

So können beispielsweise Kunststoffe, Lacke, Folien oder Fasern durch Zusatz der erfindungsgemäßen Produkte permanent antistatisch ausgerüstet werden.

In Substanz können die erfindungsgemäßen Produkte z.B. als Elektrodenmaterial in Batterien oder als Bestandteil photovoltaischer Wandler dienen.

## Ausführungsbeispiele

### Beispiel 1

Ein Streifen einer nach Shirakawa /Polym. J. 4, 460 (1973)/ hergestellten Polyacetylenfolie mit einem Gewicht von 323 mg und einer spezifischen Leitfähigkeit von 2,7 x $10^{-7}$ $\Omega^{-1}$ $cm^{-1}$ wurde unter Stickstoff 24 Std. in eine Lösung von 2 ml $SnCl_4$ in 50 ml Methylenchlorid gelegt. Nach Waschen mit wenig Methylenchlorid wurde die Folie i.Vak. getrocknet. Sie hatte ein Gewicht von 401 mg und eine spezifische Leitfähigkeit von 2,3 x $10^{-1}$ $\Omega^{-1}$ $cm^{-1}$ (gemessen als Pille bei 1937 Kp/$cm^2$).

### Beispiele 2-5

Analog Beispiel 1 wurden Polyacetylenfolien während unterschiedlichen Zeiten dem Dotierungsmittel $SnCl_4$ ausgesetzt:

| | Zeit (Std.) | Gewicht in mg vor Dotierung | nach Dotierung | Leitfähigkeit /$\Omega^{-1}cm^{-1}$/ |
|---|---|---|---|---|
| Bsp. 2 | 48 | 345 | 401 | 7,6 x $10^{-2}$ |
| " 3 | 70,5 | 306 | 356 | 1,4 x $10^{-1}$ |
| " 4 | 94,5 | 345 | 420 | 2,6 x $10^{-1}$ |
| " 5 | 118,5 | 313 | 388 | 3,1 x $10^{-1}$ |

### Beispiel 6

Zu einer Suspension, die 1,20 g Polyacetylen-"Kletten" in 100 ml Toluol enthält, fügt man bei Raumtemperatur 5 ml $SnCl_4$ und rührt 10 Stunden unter Stickstoff. Abfiltrieren liefert eine dotierte Polyacetylenfolie von 1,57 g mit einer spezifischen Leitfähigkeit von 3,7 x $10^{-1}\,\Omega^{-1}\,cm^{-1}$ (Zweielektrodenmessung bei 1900 $kp/cm^2$).

Beispiel 7

Analog Beispiel 6 erhält man durch Dotieren einer Suspension, die 0,94 g Polyacetylenfasern in 100 ml Methylenchlorid enthält, nach dem Abfiltrieren eine dotierte Polyacetylenfolie vom Gewicht 1,31 g und einer spezifischen Leitfähigkeit von 4,1 x $10^{-1}\,\Omega^{-1}\,cm^{-1}$.

Beispiel 8

Eine nach Shirakawa [Polym. J. 4, 460 (1973)] hergestellte Polyacetylenfolie mit einem Gewicht von 360 mg und einer spezifischen Leitfähigkeit von 2,7 x $10^{-7}\,\Omega^{-1}\,cm^{-1}$ wurde unter Stickstoff 24 Stunden mit einer Lösung von 2 ml $TiCl_4$ in 50 ml Methylenchlorid behandelt. Nach dem Trocknen erhält man eine Folie von 438 mg, die eine spezifische Leitfähigkeit von 2,3 x $10^{-1}\,\Omega^{-1}\,cm^{-1}$ zeigt (Zweielektrodenmessung bei 1900 $Kp/cm^2$).

Beispiel 9

Zu einer Suspension, die 920 mg "Kletten"-förmige Polyacetylenteilchen in 100 ml Toluol enthält, fügt man bei Raumtemperatur 6 ml $TiCl_4$ und rührt 20 Stunden unter Stickstoff nach. Nach dem Abfiltrieren erhält man eine Folie von 1,32 g Gewicht und einer spezifischen Leit-

fähigkeit von 6,7 x $10^{-1} \Omega^{-1}$ $cm^{-1}$ (Zweielektrodenmessung bei 1920 $Kp/cm^2$).

Beispiel 10

300 mg Polyparaphenylenpulver werden 36 Stunden in einer Lösung von 2 ml $SnCl_4$ in 50 ml Methylenchlorid gerührt. Nach Absaugen und Trocknen erhält man 412 mg eines schwarzen Pulvers mit einer spezifischen Leitfähigkeit von 3,5 x $10^{-5} \Omega^{-1}$ $cm^{1}$.

Beispiel 11

Führt man die Reaktion analog Beispiel 10 mit $TiCl_4$ durch, so erhält man ein Pulver mit einer spezifischen Leitfähigkeit von 1,6 x $10^{-4} \Omega^{-1}$ $cm^{-1}$.

Patentansprüche:

1. Verfahren zur Erhöhung der elektrischen Leitfähigkeit konjugierter organischer Polymerer, dadurch gekennzeichnet, daß man die Polymeren mit einer Verbindung des vierwertigen Titans oder vierwertigen Zinns umsetzt.

2. Verfahren nach Anspruch 1, dadurch gekennzeichnet, daß die Polymeren Polyacetylen, Polyphenylen, Polyphenylensulfide, Polypyrrol, Polythiophen bzw. deren Substitutionsprodukte sind.

3. Verfahren zur Erhöhung der elektrischen Leitfähigkeit von Polyacetylen, dadurch gekennzeichnet, daß man Polyacetylen in einer Suspension mit einer im Suspendiermittel löslichen Verbindung des vierwertigen Titans oder vierwertigen Zinns teilweise oxidiert.

4. Verfahren zur Erhöhung der elektrischen Leitfähigkeit von Polyacetylen, dadurch gekennzeichnet, daß man klettenförmige Polyacetylenteilchen gemäß Abb. 1 in Suspension mit einer im Suspendiermittel löslichen Verbindung des vierwertigen Titans oder vierwertigen Zinns teilweise oxidiert.

5. Polymere nach Anspruch 1 bis 4 mit erhöhter elektrischer Leitfähigkeit.

6. Verwendung der partiell oxidierten Polymeren nach Anspruch 1 bis 5 als elektrische Leiter, Halbleiter oder Photoleiter.

0081113

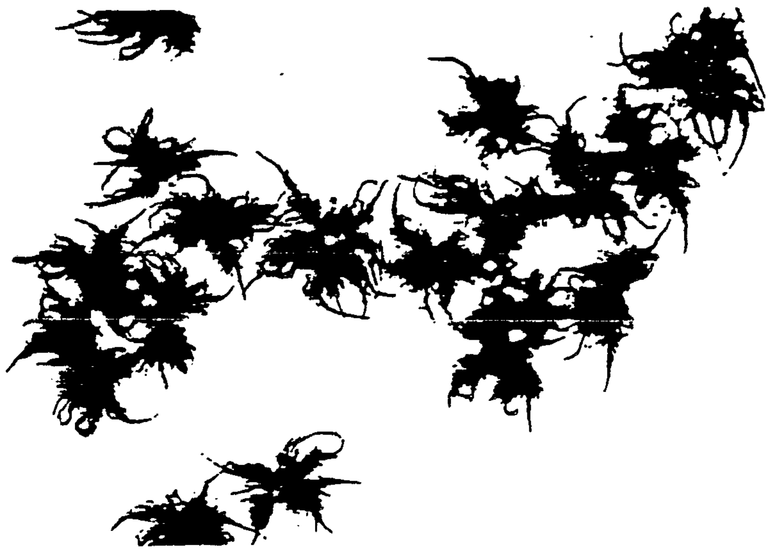

Figur 1

Klettenförmige Polyacetylenteilchen in Suspension;
105 fache Vergrößerung.